Europäisches Patentamt

European Patent Office

Office européen des brevets

(11) Publication number: **0 203 740**
**A1**

## EUROPEAN PATENT APPLICATION

(21) Application number: 86303409.6

(22) Date of filing: 06.05.86

(51) Int. Cl.⁴: **C03B 7/10**

(30) Priority: 07.05.85 US 731379

(43) Date of publication of application:
03.12.86 Bulletin 86/49

(84) Designated Contracting States:
DE FR GB IT

(71) Applicant: EMHART INDUSTRIES, INC.
426 Colt Highway
Farmington Connecticut 06032(US)

(72) Inventor: Kulig, Constantine W.
51 Mayflower Road
Windsor Connecticut 06095(US)

(74) Representative: Drury, Peter Lawrence et al
Emhart Patents Department P.O. Box 88
Ross Walk
Belgrave Leicester LE4 5BX(GB)

(54) **Cam driven straight line shear.**

(57) A cam driven straight line shear for shearing molten glass comprises two blade-carrying slides (16,18), a cam (90) and cam follower (88) drive actuating a connecting rod (76) coupled to one of the slides, an air spring (32) coupled to the connecting rod for holding the cam follower (88) on the cam (90), and an air accumulator (98) providing a selected volume for the air spring (32). The air pressure in the air spring (32) is at a maximum in a retracted position of said slides (16,18).

FIG. 1

## CAM DRIVEN STRAIGHT LINE SHEAR

This invention relates in general to new and useful improvements in cam actuated mechanisms, and more particularly to an air spring system for maintaining a cam follower in engagement with the cam at all times with the force exerted by the cam follower on the cam through the air spring system being varied between a preselected high and a preselected low in accordance with the operating reaction forces of the cam follower against the cam.

Most particularly, this invention relates to the utilisation of such an air spring system in a cam driven straight line shear for shearing a glass runner into individual gobs.

This invention constitutes a modification on the shear mechanism of United States Patent No. 4 215 611 to Francis A. Dahms, granted August 5, 1980, assigned to the assignee of the present invention. The disclosure of the aforesaid patent is incorporated herein by reference.

A shear is mounted on a spout of a glass feeder for cutting one or more gobs of glass for automatic fabrication of glass articles such as containers. Conventionally, an air cylinder is utilised for driving the shear. This same air cylinder is now utilised as an air spring in conjunction with a cam drive for the shear.

As opposed to utilising the air spring to supply a continuous loading of the cam follower against the cam, there is coupled to the cylinder an air accumulator of a preselected size wherein in the inoperative positions of the blades, a maximum force is exerted on the cam follower and when the blades move together and the pressurised volume within the cylinder increases, a controlled reduction in the force exerted by the air spring on the cam follower is effected, thereby reducing the total loading on the cam by the cam follower at the time a gob is being cut.

Utilising the afore-described air spring arrangement, contact may be maintained between a cam follower and a cam notwithstanding the cam having a complex shape so as to provide for a high-speed operation 5 of the shear in a minimum time of the blades being in contact with the glass runner.

In the drawings, wherein throughout like numerals refer to like parts.

Figure 1 is a schematic plan view of a shear 10 mechanism incorporating the invention;

Figure 2 is a fragmentary side elevational view showing the details of the coupling of a connecting rod to one of the slides;

Figure 3 is an enlarged fragmentary sectional view taken generally along the line 3-3 of Figure 1 and shows the details of the drive coupling for simultaneous movement of the two slides and incorporating the linear air motor which functions as the air spring;

Figure 4 is a fragmentary plan view of the shear 20 mechanism showing the incorporation of an accumulator and regulated air supply for the air cylinder; and

Figure 5 is a fragmentary side elevational view of the shear mechanism of the apparatus of Figure 4.

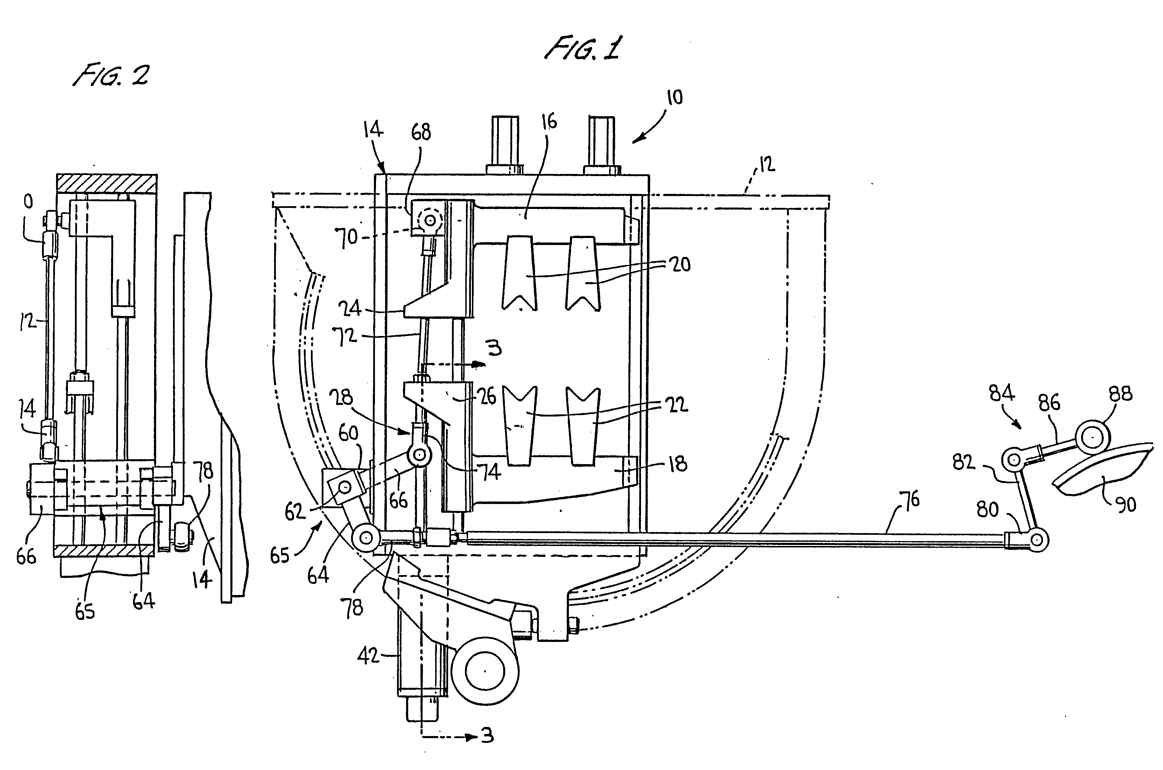

Referring now to the drawings in detail, reference is first made to Figure 1 wherein it will be seen that the shear, which is generally identified by the numeral 10, is mounted relative to a gob spout 12. The shear 10 includes a supporting frame, generally identified by the numeral 14, which carries suitable guides which mount for reciprocation an upper slide 16 and a lower slide 18. The two slides 16, 18 carry for cooperation blades 20 and 22, respectively. At this time it is pointed out that there is illustrated two sets of blades so that two glass streams (not shown) may be sheared simultaneously.

It is to be noted that the upper slide 16 is provided with a bracket 24, and the lower slide 18 is provided with a similar bracket 26. Previously, these brackets had coupled thereto a drive mechanism for reciprocating the slides first together to effect a shearing operation with the blades 20, 22, and then separating the slides.

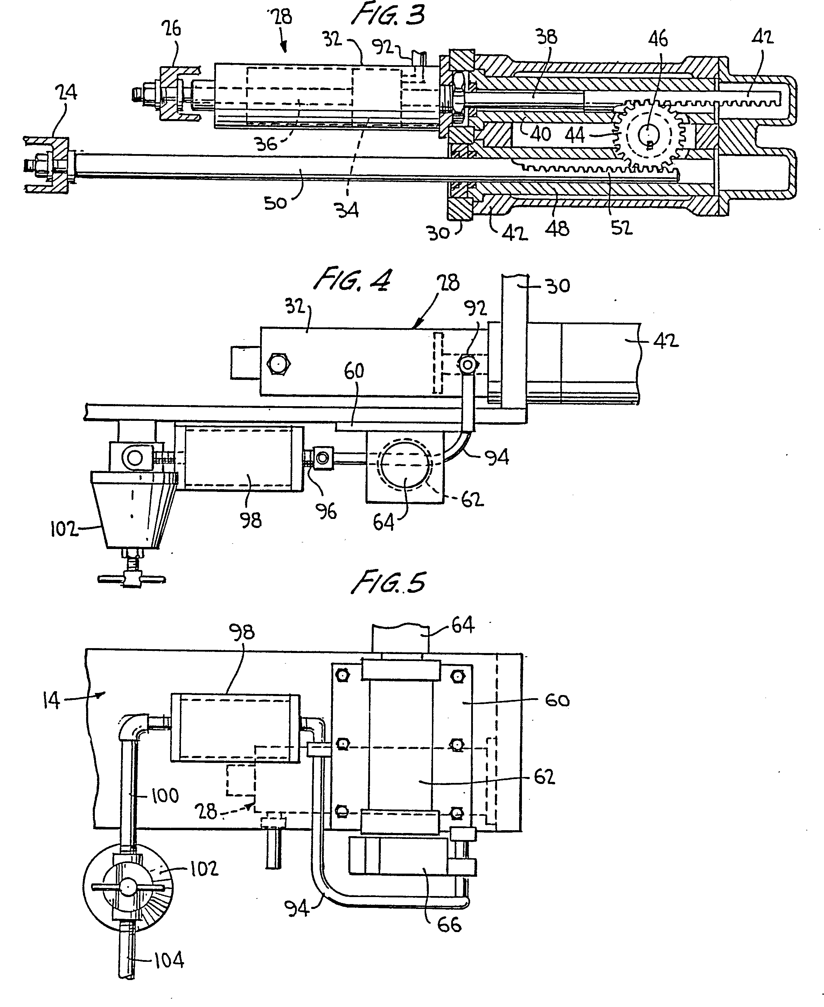

Referring to Figure 3, a prior drive mechanism for the slides of the type disclosed in U.S. Patent No. 4 215 611 is shown. This prior drive mechanism includes a linear air motor, generally identified by the numeral 28 which is suitably mounted on a frame member 30. The air motor 28 includes a cylinder 32 having therein a piston 34 to which there is attached a piston rod 36. The piston rod 36 projects from the cylinder 32 and is coupled to the bracket 26.

At the opposite end of the cylinder 32, the piston rod 36 has an extension 38 which is slideably mounted in a guide tube 40 which, in turn, is mounted in a housing 42. The piston rod extension 38 includes a rack portion 43 which is meshed with a pinion 44 carried by a shaft 46 mounted for suitable rotation or oscillation.

The housing 42 also carries a guide tube 48 in which there is slideably and guidedly mounted a rod 50 which has a rack portion 52 also meshed with the pinion 44. The rod 50 is attached to the bracket 24.

Previously, the motor 28 was of the double-acting type and when the piston 34 moved to the left, the slides 16, 18 moved together; and, when the piston moved to the right, the slides moved apart.

In accordance with this invention, the same drive illustrated in Figure 3 is utilised to simultaneously move the slides 16 and 18. However, the linear fluid motor 28 is no longer the drive element for the shear, as will be described in detail hereinafter.

Referring more particularly to Figures 1, 4 and 5, the frame or support 14 is provided with a bracket 60 disposed at one side thereof. The bracket 60 has journalled therein a shaft 62 which has coupled to the top end thereof a lever arm 64. A second lever arm 66 is secured to the bottom end of the shaft 62 so that the shaft 62 and the lever arms 64 and 66 together form a bell crank assembly 65.

The upper slide 16 is provided with an additional bracket 68 to which there is pivotally connected a rod end 70 mounted on one end of an elongated rod 72. The rod 72 carries at its opposite end a rod end 74 which is pivotally connected to the lever arm 66. It is to be understood that for certain angle mountings of the shear relative to spout 12 it is necessary that a shortened version of rod 72 is coupled to a bracket (not shown) connected to the lower slide 18 instead of the bracket 68 carried by the upper slide 16. The drive for the shear also includes a connecting rod 76 which has a rod end 78 pivotally connected to the lever arm 64. The opposite end of the connecting rod 76 is provided with a rod end 80 which is pivotally connected to an arm 82 of a bell crank 84. The bell crank 84 has a second arm 86 which carries a cam follower 88 which engages a cam 90 of which only a portion is illustrated. It is to be understood that the effective overall length of the connecting rod 76 varies in accordance with the angle mounting of the shear relative to the spout 12.

It will be understood that the shear 10, in accordance with the present invention, is actuated by the cam 90. It is also to be understood that the cam 90 will be of a profile which will permit a large number of actuations of the shear per minute and at the same time maintain the resident time of the blades 20, 22 in alignment with, or under, a glass runner at a minimum. Accordingly, the cam follower 88 has a tendency to separate relative to the cam 90. It is, therefore, desirable to maintain the cam follower 88 in pressure contact with the cam 90 at all stages in the operation of the drive mechanism.

In accordance with this invention, the linear air motor 28 is utilised as an air spring. The left-hand end of the cylinder 32 is vented to the atmosphere and only the air connection 92 to the right-hand end is utilised.

Initially, the connection 92 was coupled to a regulated air supply. According to calculations, an air pressure of 35 psi (2.41 bar) within the cylinder 32 would provide proper operation. However, this constant pressure within the air cylinder or linear fluid motor 28 would not hold the cam follower 88 in engagement with cam 90 at all times.

Referring now to Figures 4 and 5, it will be seen that the connection 92 is one end of a tube 94 which has at its opposite end a connection 96 coupled to an air accumulator 98. The air accumulator 98 has, in turn, coupled thereto a pipe 100 which leads from an air regulator 102 which may be adjustable. The air regulator 102 receives a regulated air supply through a pipe 104.

It was found that if the air pressure within the linear air motor 28 was maintained at 35 psi (2.41 bar), the shear did operate but its operation could be improved and accordingly the air accumulator 98 was provided. By utilising the air accumulator, the pressure within the chamber of the cylinder to which the fitting 92 is coupled may be varied from a high at the time when the linear air motor 28 functions as a means to return the slides to their starting positions to a minimum at the time of shear cut. This is possible by supplying air to the accumulator 98 only at a preselected pressure, such as 30 psi (2.07 bar), which would apply a 505-pound - (2246 Newtons) load by the cam follower 88 on the cam 90. This pressure is received in the system when the piston 34 has moved all of the way to the left at the maximum cutting stroke. Then, as the piston 34 is moved to the right under the influence of the cam 90, the volume within the chamber of the cylinder 32 and the air accumulator 98 will be reduced and the pressure rise to 67 psi (4.62 bar) which exerts a force by the cam follower 88 on the cam 90 of 1129 pounds (5022 Newtons). Thus, during the instroke of the shear blades, the air motor 28 applies a force by the cam follower 88 on the cam 90 which reduces gradually from 1129 pounds (5022 Newtons) to 505 pounds (2246 Newtons), and, during the outstroke of the shear blades, the force gradually increases until the original level is reached.

It will thus be seen that an existing straight line shear may be modified to have a cam drive and the conventional linear air motor thereof, which formerly was the drive element as shown in U.S. Patent No. 4 215 611, may become a part of an air spring.

It is also to be understood that such an air spring arrangement could be utilised in other environments.

**Claims**

1. A cam driven straight line shear for shearing glass runners or the like to form gobs, said shear comprising a shear set (20,22) having at least one moving blade mounted on a slide (16,18), and guide means (14) supporting said slide for movement along a preselected path, characterised in that the shear also comprises a cam (90), a cam actuated connecting rod (76), first means (65,72) coupling said connecting rod to said slide (16) for moving said slide and said at least one blade (20) along said preselected path, second means - (84,88) drivingly connecting said cam (90) and said connecting rod (76) including a cam follower (88) engaging said cam, an air spring (32) coupled to said connecting rod for holding said cam follower against said cam, and an air accumulator (98) coupled to said air spring providing said air spring with a selected volume whereby air pressure in said air spring will be a maximum in a retracted position of said at least one blade and a minimum when said at least one blade is in a shearing position.

2. A shear according to claim 1, characterised in that said air spring (32) is coupled to said connecting rod (76) through said slide (16).

3. A shear according to either one of claims 1 and 2, characterised in that said air spring (32) is an air cylinder and includes a cylinder (32) having therein a piston (34), and a piston rod (36,38) is carried by said piston for moving said piston in accordance with the movement of said at least one blade (20) by said connecting rod (76).

4. A shear according to claim 3, characterised in that there is a pressurised air connection (92) to said cylinder for internally pressurising said cylinder on that side of said piston to urge said at least one blade (20) to a cutting position.

5. A shear according to claim 4, characterised in that said air accumulator (98) is coupled to said cylinder (32) through said air connection (92) to effectively increase the volume of said cylinder.

6. A shear according to claim 5, characterised in that the shear also comprises controlled pressure air supply (102) coupled to said accumulator (98) for maintaining air within said accumulator and said cylinder (32) at a preselected minimum.

7. An air spring system for maintaining relatively movable members in contacting relation at varied loadings under different loading operating conditions, said air spring system comprising a linear air motor including a cylinder (32) and piston arrangement (34), a piston rod (36,38) carried by said piston coupled to one of said members, air within a chamber in said cylinder reacting on said piston and piston rod acting to move said one member towards the other of said members to maintain pressure contact between said members, said one member being movable by the other of said members in an increased loading operating direction such that said piston is moved in a chamber volume increasing position thereby decreasing air pressure on said piston, and an air accumulator - (98) coupled to said chamber to provide a selected chamber volume whereby said piston rod may exert a selected maximum and a selected minimum force on said one member.

8. An air spring system according to claim 7, characterised in that a source of air at a preselected pressure is coupled to said accumulator (90).

9. A straight line shear comprising two slides - (16,18) carrying opposed cooperating blades - (20,22), and a drive for simultaneously moving said slides selectively together and apart, a linear air motor (32) of the piston and cylinder type coupled to one of said slides; characterised in that the shear comprises a cam (90) and follower (88) drive coupled to one of said slides for actuating said blades, and said cylinder has coupled thereto a continuous closed air pressure supply so as to function as an air spring for retaining said cam follower against said cam.

10. A shear according to claim 9, characterised in that said continuous air pressure supply includes an accumulator (98) for increasing the effective volume of said cylinder.

FIG.1

FIG.2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 215 611 (F.A. DAHMS) <br> * claim 1 * | 1,7,9 | C 03 B 7/10 |
| A | US-A-4 500 334 (E. PARKELL et al.) <br> * complete document * | 1,7,9 | |

--- 

-----

|  |  |  | **TECHNICAL FIELDS SEARCHED (Int. Cl.4)** |
|---|---|---|---|
|  |  |  | C 03 B 7/10 |

The present search report has been drawn up for all claims

| Place of search | Date of completion of the search | Examiner |
|---|---|---|
| BERLIN | 15-08-1986 | STROUD J.G. |